# EUROPÄISCHE PATENTSCHRIFT

(11) **EP 0 771 248 B1**
(45) Veröffentlichungstag und Bekanntmachung des Hinweises auf die Patenterteilung: **25.11.1998**
(21) Anmeldenummer: 95925715.5
(22) Anmeldetag: 21.07.1995
(51) Int. Cl.: B23Q 39/02, B27M 1/08, B23Q 41/02

(54) **VERFAHREN ZUM BEARBEITEN VON LÄNGSPROFILEN ENDLICHER LÄNGE**
PROCESS FOR PRODUCING ELONGATED SECTIONS OF DEFINITIVE LENGTH BY MACHINING
PROCEDE DE PRODUCTION PAR USINAGE DE PROFILES ALLONGES DE LONGUEUR DEFINITIVE

(30) Priorität: 21.07.1994 DE 4425862
(43) Veröffentlichungstag der Anmeldung: 07.05.1997
(73) Patentinhaber: Dorner, Reiner, 74405 Gaildorf (DE); Dieckmann-Keden, Hans-Karl, 25704 Epen-Wöhrden (DE)
(72) Erfinder: Dorner, Reiner, 74405 Gaildorf (DE); Dieckmann-Keden, Hans-Karl, 25704 Epen-Wöhrden (DE)
(74) Vertreter: Schuster, Gregor, Dipl.-Ing.
(86) Internationale Anmeldenummer: DE9500962
(87) Internationale Veröffentlichungsnummer: WO9603254

(56) Entgegenhaltungen:
- EP-A- 0 443 398
- WO-A-92/12816
- DE-A- 4 101 904
- DE-U- 8 333 479
- GB-A- 397 781

## Beschreibung

### Stand der Technik

Die Erfindung geht aus von einer Vorrichtung nach dem Oberbegriff des Hauptanspruchs wie sie aus WO-A-92 12 816 bekannt ist.

Bei der Bearbeitung von Längsprofilen endlicher Länge, wie sie beispielsweise für Fenster, Türen und Rahmen bekannt sind, sind verschiedene, insbesondere spanabhebende Arbeitsgänge erforderlich, wie beispielsweise Bohren, Fräsen, Hobeln, Schleifen, Stoßen usw., für die entsprechende Werkzeuge und Werkzeugmaschinen benötigt werden. Die zu bearbeitenden Teile werden nach der Längung den jeweiligen Maschinen zugeführt und dort bearbeitet, wobei üblicherweise ein erheblicher Aufwand für die Zuführung der Teile und deren Positionierung gegenüber den Werkzeugen betrieben wird. Die Werkstücke müssen vor der jeweiligen Bearbeitung nach dem Positionieren eingespannt und danach wieder gelöst werden, um zur nächsten Bearbeitungsstation transportiert zu werden. Diese Vorgänge sind nicht nur technisch besonders aufwendig in bezug auf Transportieren, Positionieren, Spannen, Lösen und erneutes Transportieren, sondern sie brauchen auch verhältnismäßig viel Zeit, was das Produkt erheblich verteuert. Hierbei ist zu berücksichtigen, daß es sich besonders beim Fenster- bzw. Türenbau selten um größere Serien handelt, sondern im allgemeinen um Sondergrößen, so daß auch hierdurch besondere Anforderungen an das Transportieren, Positionieren, Spannen und Lösen des Werkstücks gestellt werden.

Es ist eine Vorrichtung (GB-A-397 781) zur Bearbeitung von Kesseln und ähnlichen zylindrischen Werkstücken bekannt. Da die meisten mit dieser Vorrichtung ausführbaren Bearbeitungen (bohren, fräsen, schleifen) lotrecht oder parallel zur Werkstückoberfläche erfolgen, ist es notwendig, eine Führung für den Werkzeugträger vorzusehen, mit dessen Hilfe er so an der gewünschten Stelle der Zylinderoberfläche positioniert werden kann, daß die Längsachse der Werkzeugspindel lotrecht zur Werkstückoberfläche verläuft, wobei Bearbeitungen nur innerhalb eines Schwenkbereichs von etwas mehr als 180°, bezogen auf das Werkstück, durchgeführt werden können. Die Höhenverstellung des Werkzeugträgers dient zur Anpassung der Vorrichtung an unterschiedliche Werkstück-Durchmesser.

Außerdem ist eine Holzbearbeitungsmaschine (WO-A-92 12 816) zur Bearbeitung von Brettern bekannt. Sie weist eine zweiteilige Transporteinrichtung und dazwischen fest angeordnete Führungsmittel, die verschiedene Werkzeuge führen, auf. Bedingt durch diesen Aufbau ist für jedes Werkzeug eine separate Steuerung notwendig, so daß der Herstellungsaufwand für den genannten Gegenstand entsprechend groß und eine Bearbeitung des Werkstücks von der Seite nur mit Einschränkungen möglich ist. Darüber hinaus sind die Klemmeinrichtungen dieser Holzbearbeitungsmaschine nicht ohne weiteres für verschiedene Profile einsetzbar.

### Die Erfindung und ihre Vorteile

Die erfindungsgemäße Vorrichtung mit den Merkmalen des Hauptanspruchs hat demgegenüber den Vorteil, daß Längsprofile unterschiedlichster Querschnitte und Längen von allen Seiten bei gleichzeitig geringer Zahl von Bearbeitungsachsen bearbeitet werden können. Zudem wird nur ein geringer Raum für den Bearbeitungsbereich und wenig Personaleinsatz benötigt. Aufgrund der Einsparung von Werkstücktransporten, also wenig Transportierwegen, wird auch die Gefahr der Beschädigung der Werkstücke während des Transports minimiert. Nicht zuletzt können Profillängen mit großen Längenunterschieden` nämlich zwischen 500 mm und 4.000 mm problemlos auf einer Anlage bearbeitet werden. Überdies ist der Transport und die Bearbeitung beliebig geformter Profilstangen möglich, weil das Profil von den Seiten und von oben und unten geführt und bewegt werden kann, wobei die Bearbeitung von verschiedenen Seiten und in unterschiedlichen Ebenen erfolgen kann. Die Flexibilität bei der Bearbeitung unterschiedlichster Werkstücke kann weiter erhöht werden, durch Kombinieren mehrerer insbesondere zum Bearbeitungsbereich gehörenden Bearbeitungsstationen mit ihren Werkzeugmaschinen. Da jede dieser Bearbeitungsstationen bzw. jedes Werkzeug einem bestimmten veränderbaren Programm gehorchen, kann der Produktionsprozess durch die Programmabfolge in den hintereinander angeordneten Bearbeitungsstationen optimiert werden.

Nach einer vorteilhaften Ausgestaltung der Erfindung sind in jeder Bearbeitungsstation in Längsrichtung hintereinander angeordnet ein Transportsystem, ein Spannsegment, ein Werkzeugträger, ein weiteres Spannsegment und ein weiteres Transportsystem, so daß eine Vielzahl von Bearbeitungsschritten hintereinander ausgeführt werden können und/oder Längsprofile besonders großer Länge bearbeitbar sind.

Nach einer weiteren vorteilhaften Ausgestaltung der Erfindung ist die Bearbeitungsstation symmetrisch bezüglich des Werkzeugträgers, so daß die Herstellung der Bearbeitungsstationen und die Verbindung mehrerer Bearbeitungsstationen vereinfacht werden.

Nach einer weiteren vorteilhaften Ausgestaltung der Erfindung ist vorgesehen, daß die Drehachsen der seitlichen Transportrollen vertikal angeordnet sind und die Rollen einer Seite quer zur Längsachse des Längsprofils in horizontaler Richtung verschiebbar sind, um die Anpassung an verschiedene Profilquerschnitte zu ermöglichen.

Nach einer weiteren vorteilhaften Ausgestaltung der Erfindung ist vorgesehen, daß die Drehachsen der über dem Längsprofil angeordneten Transportrollen waagrecht und quer zur Längsrichtung des Längsprofils angeordnet und in vertikaler Richtung verschiebbar sind, um die Anpassung an verschiedene Profilquerschnitte zu ermöglichen.

Nach einer weiteren vorteilhaften Ausgestaltung der Erfindung sind die Transportrollen 150 bis 250 mm lang, so daß die Längsprofile mit häufig vorkommende Querschnitten besonders gut geführt und transportiert werden.

Nach einer weiteren vorteilhaften Ausgestaltung der Erfindung verfügt die Anlage über eine Einrichtung zum genauen Erfassen der Position des Längsprofils in Längsrichtung, so daß zusammen mit den Transportsystemen jede Stelle des Längsprofiles in die Aussparung des Werkzeugträgers transportiert werden, um dort bearbeitet zu werden. Weiterhin ist es dadurch möglich, die Bearbeitung nicht nur in den zwei Achsen, die senkrecht zur Längsachse des Längsprofils liegen, vorzunehmen, sondern auch eine Bearbeitung in Richtung der Längsachse des Längsprofils vorzunehmen.

Nach einer weiteren vorteilhaften Ausgestaltung der Erfindung ist der Hauptrahmen während der Bearbeitung in Längsrichtung der Längsprofile verschiebbar, so daß auch dreidimensionale Bearbeitungen möglich sind.

Bevorzugle Ausführungen sind der nachfolgenden Beschreibung, der Zeichnung und den Ansprüchen entnehmbar.

### Zeichnung

Zwei Ausführungsbeispiele des Gegenstands der Erfindung sind in den Zeichnungen dargestellt und im folgenden näher beschrieben. Es zeigen
- Fig. 1: einen Längsschnitt durch eine Bearbeitungsstation;
- Fig. 2: einen Querschnitt durch eine Bearbeitungsstation und
- Fig. 3: einen Querschnitt durch eine Bearbeitungsstation mit in Längsrichtung verschiebbarem Hauptrahmen

### Beschreibung des Ausführungsbeispiels

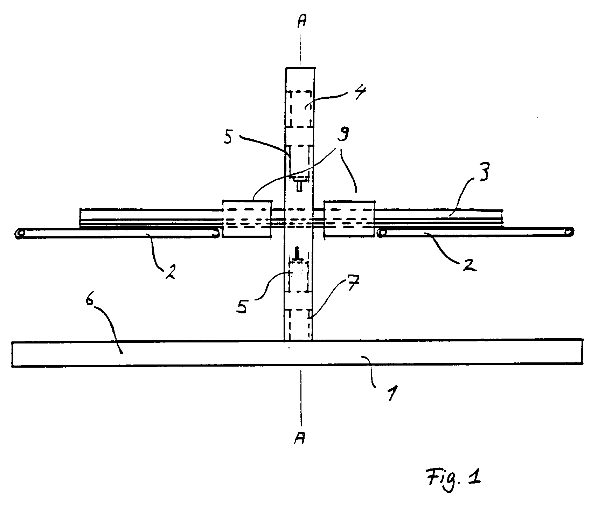

Fig. 1 dient vor allem dazu, die prinzipielle Anordnung des Grundrahmens 1, der unvollständig dargestellten Profiltransportsysteme 2 und des Längsprofils 3 deutlich zu machen. Weiterhin ist zu erkennen, daß die Bearbeitung des Längsprofils in der Ebene A-A erfolgt.

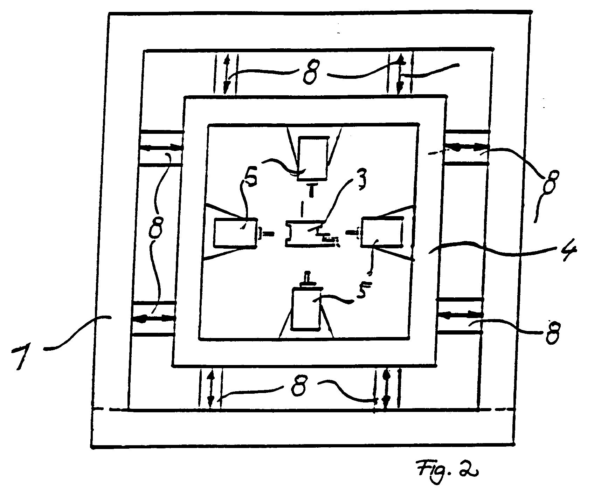

In Fig. 2 ist der Querschnitt einer Bearbeitungsstation in der Ebene A-A dargestellt. In dieser Darstellung ist erkennbar, daß der Werkzeugträger 4 verschiebbar in dem Grundrahmen 1 befestigt ist und, daß durch die Bewegung des Werkzeugträgers 4 in der Ebene A-A mittels Hubeinrichtungen 8 alle Seiten des Längsprofils 3 bearbeitet werden können. Durch eine nicht dargestellte Vorrichtung zum kontrollierten Verschieben des Längsprofils 3 können Bearbeitungen in drei Achsen erfolgen. Weiterhin können die Werkzeuge 5 eigene Bearbeitungsachsen haben, um komplizierte Bearbeitungen durchführen zu können.

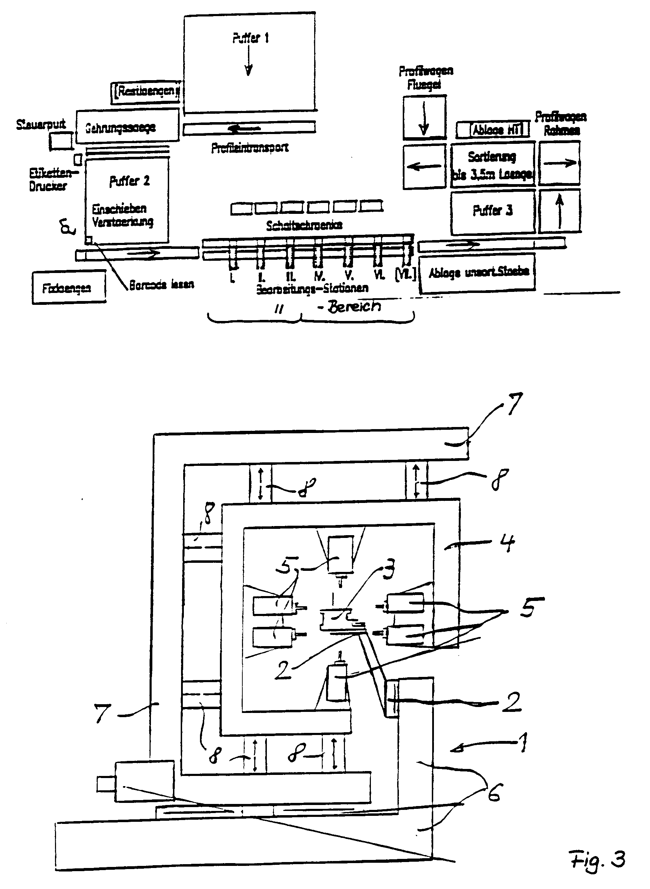

Weiterhin kann die Vorrichtung gemäß Fig. 3 ausgeführt sein. Bei Fig. 3 handelt es sich ebenfalls um einen Querschnitt einer Bearbeitungsstation in der Ebene A-A. An einem Grundrahmen 1 ist ein Profiltransportsystem 2 befestigt, welches das Werkstück 3 trägt. Über nicht dargestellte Mittel wird dieses Werkstück 3 nach Einfahren in den Grundrahmen positioniert und festgespannt, was beispielsweise über Spannsegmente erfolgen kann.

Um das Profiltransportsystem 2 bzw. das eingefahrene Längsprofil 3 herum ist auf dem Hauptrahmen 7 ein Werkzeugträger 4 angeordnet, an dem in Richtung zum Längsprofil 3 hin wirkende Werkzeuge 5 angeordnet sind, beispielsweise Bohr- oder Fräswerkzeuge. Für die jeweilige Bearbeitung des in Ruhe fixierten Längsprofils 3 wird zuerst der Werkzeugträger 4 positioniert, wonach das jeweils angesprochene Werkzeug den ihm zugeordneten Bearbeitungsvorgang durchführt. Wenn mehrere Bearbeitungsvorgänge von einer solchen Bearbeitungsstation durchgeführt werden sollen, so wird erforderlichenfalls der Werkzeugträger 4 nach Ablauf einer Bearbeitung für ein anderes seiner Geräte 5 in eine neue Position verfahren, damit das andere seiner Geräte 5 das Längsprofil 3 bearbeiten kann.

Der Grundrahmen 1 kann erfindungsgemäß aufgeteilt sein in ein Grundgestell 6 und ein auf diesem angeordneten Hauptrahmen 7, der wiederum gegenüber dem Grundgestell 6 in Längsrichtung verfahrbar ist, wobei von diesem Hauptrahmen 7 der Werkzeugträger getragen wird, während das Profiltransportsystem vom Grundgestell 6 getragen wird. Für das radiale Heranfahren der einzelnen Werkzeugmaschinen 5 an das Werkstück 3 dient der Werkzeugträger 4, indem er über entsprechende Hubeinrichtungen 8 relativ zum Hauptrahmen 7 in zwei senkrecht zur Längsachse der Bearbeitungsstation und Zueinander verlaufenden Richtungen verfahrbar ist. Erforderlichenfalls kann je nach Bearbeitungserfordernis das Werkstück zusätzlich, jedoch nur in Fertigungspausen in Längsrichtung verfahren werden.

### Bezugszahlenliste

- 1: Grundrahmen
- 2: Profiltransportsystem
- 3: Längsprofil
- 4: Werkzeugträger
- 5: Werkzeuge
- 6: Grundgestell
- 7: Hauptrahmen
- 8: Hubeinrichtung
- 9: Spannsegment

## Patentansprüche

1. Vorrichtung zum Bearbeiten von Längsprofilen endlicher Länge
- mit an einer portalförmigen Bearbeitungsstation angeordneten, in einer quer zur Längsachse der Bearbeitungsstation verlaufenden Ebene verschiebbaren Werkzeugen (5) oder Werkzeugmaschinen (5), mit denen das Längsprofil (3) bearbeitbar ist,
- mit an der Bearbeitungsstation angeordneten Spannsegmenten (9) zur Fixierung des Längsprofils (3), und
- mit einem Transportrollen umfassendem Transportsystem (2), so daß das Längsprofil (3) durch die Aussparung schiebbar ist, dadurch gekennzeichnet,
- daß ein mittig zu der portalförmigen Bearbeitungsstation angeordneter Werkzeugträger (4) vorgesehen ist,
- daß der Werkzeugträger (4) in der Mitte eine Aussparung aufweist, die größer als der Querschnitt des Längsprofils (3) ist,
- daß die Werkzeuge oder Werkzeugmaschinen an dem Werkzeugträger (4) montiert sind, deren Bearbeitungsbereiche, in Längsrichtung der Bearbeitungsstation gesehen, im Bereich der Aussparung sind,
- daß durch die Bewegungen des Werkzeugträgers (4) in zwei senkrecht zur Längsachse der Bearbeitungsstation und zueinander verlaufenden Achsen alle Seiten des Längsprofils bearbeitbar sind und
- daß das Transportsystem (2) von oben und von den Seiten hintereinander in Längsrichtung des Profils angeordnete Transportrollen und ein in Längsrichtung des Profils verlaufendes Transportband aufweist.

2. Vorrichtung nach Anspruch 1 dadurch gekennzeichnet, daß in jeder Bearbeitungsstation in Längsrichtung hintereinander angeordnet sind: ein Transportsystem (2), ein Spannsegment (9), ein Werkzeugträger (4), ein weiteres Spannsegment (9) und ein weiteres Transportsystem (2).

3. Vorrichtung nach Anspruch 2, dadurch gekennzeichnet, daß die Bearbeitungsstation symmetrisch bezüglich des Werkzeugträgers (4) ist.

4. Vorrichtung nach einem der vorhergehenden Ansprüche, dadurch gekennzeichnet, daß die Drehachsen der seitlichen Transportrollen vertikal angeordnet sind und die Rollen einer Seite quer zur Längsachse der Längsprofils (3) in horizontaler Richtung verschiebbar sind.

5. Vorrichtung nach einem der vorhergehenden Ansprüche, dadurch gekennzeichnet, daß die Drehachsen der über dem Längsprofil (3) angeordneten Transportrollen waagrecht und quer zur Längsrichtung des Längsprofils (3) angeordnet und in vertikaler Richtung verschiebbar sind.

6. Vorrichtung nach Anspruch 5 dadurch gekennzeichnet, daß die Transportrollen 150 bis 250 mm lang sind.

7. Vorrichtung nach einem der Ansprüche 1 bis 5, dadurch gekennzeichnet, daß eine Einrichtung zum genauen Erfassen der Position des Längsprofils (3) in Längsrichtung vorhanden ist.

8. Vorrichtung nach einem der Ansprüche 1 bis 5, dadurch gekennzeichnet, daß der Werkzeugträger (4) an einem während der Bearbeitung in Längsrichtung verschiebbaren Hauptrahmen (7) angeordnet ist.

## Claims

1. Device for producing elongated sections of finite length
- with tools (5) or tool machines (5) disposed on a window shaped processing station for displacement in a plane transverse to the longitudinal axis of the processing station to produce the elongated section (3),
- with holding memoers (9) disposed on the processing station for fixing the elongated section (3) and
- with a transport system (2) comprising transport rollers for pushing the elongated section (3) through the opening
characterized in that,
- a tool carrier (4) is provided for central to the window shaped processing station, and
- the tool carrier (4) has a central opening which is larger than the cross section of the elongated section (3),
- and the tools or tool machines are mounted to the tool carrier (4) having processing regions, as seen in the longitudinal direction of the processing station, near the opening,
- and all sides of the elongated section can be worked through motion of the tool carrier (4) along two axes which are perpendicular to the longitudinal axis of the processing station and which extend towards each other, and
- the transport system has transport rollers above and at the sides disposed behind each other in the longitudinal direction of the section as well as a transport band extending in the longitudinal direction of the section.

2. Device according to claim 1, characterized in that a transport system (2), a holding member (9), a tool carrier (4), an additional holding member (9) and an additional transport system (2) are disposed in each processing station behind each other in the longitudinal direction.

3. Device according to claim 2, characterized in that the processing station is symmetric with respect to the tool carrier (4).

4. Device according to any one of the preceding claims, characterized in that the rotation axis of the sideward transport rollers is vertically disposed and the rollers at one side can be displaced in a horizontal direction transverse to the longitudinal axis of the elongated section (3).

5. Device according to any one of the preceding claims, characterized in that the axis of rotation of the transport rollers disposed above the elongated section (3) are horizontal and disposed transverse to the longitudinal direction of the elongated section (3) and can be displaced in a vertical direction.

6. Device according to claim 5, characterized in that the transport rollers are 150 to 250 mm long.

7. Device according to any one of the claims 1 through 5, characterized in that a device is provided for precise measurement of the position of the elongated section (3) in the longitudinal direction.

8. Device according to any one of the claims 1 through 5, characterized in that the tool carrier (4) is disposed on a main frame (7) which can be displaced in the longitudinal direction during processing.

## Revendications

1. Dispositif d'usinage de profilés allongés de longueur définitive,
- avec des outils (5) ou machines-outils (5) qui peuvent se déplacer sur un plan transversal par rapport à l'axe longitudinal de la station d'usinage, qui sont disposés sur une station d'usinage en forme de portail, et avec lesquels le profilé allongé (3) peut être travaillé,
- avec des segments de serrage (9) disposés sur la station d'usinage pour fixer le profilé allongé (3) et avec un système de transport (2) comprenant des galets de roulement, si bien que le profilé allongé (3) peut être passé à travers l'évidement,
caractérisé
- en ce qu'un porte-outil (4) est prévu au centre de la station d'usinage en forme de portail,
- en ce que le porte-outil (4) présente en son centre un évidement qui est plus grand que la section transversale du profilé allongé (3),
- en ce que les outils ou machines-outils peuvent être montés sur le porte-outil (4), dont les zones d'usinage, vues en direction longitudinale de la station d'usinage, se trouvent dans le domaine de l'évidement,
- en ce que tous les côtés du profilé allongé peuvent être travaillés, par les mouvements du porte-outil (4) dans deux axes perpendiculaires par rapport à l'axe longitudinal de la station d'usinage et orientés l'un vers l'autre, et
- en ce que le système de transport (2) comporte, d'en haut et des côtés, des galets de roulement disposés l'un après l'autre en direction longitudinale du profilé, ainsi qu'un tapis roulant d'orientation longitudinale par rapport au profilé.

2. Dispositif selon la revendication 1, caractérisé en ce que sont disposés dans chaque station d'usinage, en file en direction longitudinale: un système de transport (2), un segment de serrage (9), un porte-outil (4), un autre segment de serrage (9) et un autre système de transport (2).

3. Dispositif selon la revendication 2, caractérisé en ce que la station d'usinage est symétrique par rapport au porte-outil (4).

4. Dispositif selon l'une des revendications précédentes, caractérisé en ce que les axes rotatifs des galets de roulement latéraux sont agencés verticalement et que les galets d'un côté peuvent coulisser en direction horizontale, transversalement par rapport à l'axe longitudinal du profil allongé (3).

5. Dispositif selon l'une des revendications précédentes, caractérisé en ce que les axes rotatifs des galets de roulement disposés au-dessus du profilé allongé (3) sont agencés horizontalement et transversalement par rapport à la direction longitudinale du profilé allongé (3), et qu'ils peuvent coulisser en direction verticale.

6. Dispositif selon la revendication 5, caractérisé en ce que les galets de roulement ont une longuueur de 150 à 250 mm.

7. Dispositif selon l'une des revendications 1 à 5, caractérisé en ce qu'il y a un dispositif de saisie précise de la position du profilé allongé (3) en direction longitudinale.

8. Dispositif selon l'une des revendications 1 à 5, caractérisé en ce que le porte-outil (4) est disposé sur un châssis principal (7) pouvant coulisser en direction longitudinale pendant l'usinage.
